# EUROPÄISCHE PATENTSCHRIFT

(11) **EP 3 584 547 B1**
(45) Veröffentlichungstag und Bekanntmachung des Hinweises auf die Patenterteilung: **25.05.2022**
(21) Anmeldenummer: 19180625.6
(22) Anmeldetag: 17.06.2019
(51) Int. Cl.: G01G 23/01

(54) **MODULARES MESSSYSTEM UND VERFAHREN ZUM ERSTELLEN EINES KOMPATIBILITÄTSNACHWEISES FÜR EIN SOLCHES MESSSYSTEM**
MODULAR MEASUREMENT SYSTEM AND METHOD FOR CREATING PROOF OF COMPATIBILITY FOR SUCH A SYSTEM
SYSTÈME DE MESURE MODULAIRE ET PROCÉDÉ DE GÉNÉRATION D'UNE ÉVIDENCE DE COMPATIBILITÉ POUR UN TEL SYSTÈME DE MESURE

(30) Priorität: 18.06.2018 DE 102018209826
(43) Veröffentlichungstag der Anmeldung: 25.12.2019
(73) Patentinhaber: Siemens Aktiengesellschaft, 80333 München (DE)
(72) Erfinder: Schöttinger, Martin, 76187 Karlsruhe (DE)

(56) Entgegenhaltungen:
- WO-A2-02/12840
- DE-A1-102014 100 754

## Beschreibung

Messgeräte, die dem gesetzlichen Messwesen (legal metrology), beispielsweise in Deutschland dem Mess- und Eichgesetz, unterliegen, dürfen nur dann in Verkehr gebracht werden, wenn sie bestimmte Voraussetzungen erfüllen. Unter Messgeräten sind hier Geräte und Systeme von Geräten mit einer Messfunktion zu verstehen, also z. B. auch Waagen oder Analysensysteme. Die gesetzlichen Regelungen für Messgeräte gelten in gleicher Weise auch für Zusatzeinrichtungen zu Messgeräten und Teilgeräte. Betroffen sind Messgeräte, die für in den gesetzlichen Regelungen festgelegte Messzwecke und Verwendungen bestimmt sind, z. B. für Messungen im geschäftlichen Verkehr, für Messungen zur Abrechnung (Verbrauchsmessgeräte) oder für Messungen zu amtlichen Zwecken.

Damit Messgeräte in Verkehr gebracht werden dürfen, müssen sie die gesetzlich vorgegebenen wesentlichen Anforderungen (essential requirements) erfüllen. Zum Nachweis der Konformität mit den wesentlichen Anforderungen muss ein geeignetes Konformitätsbewertungsverfahren (conformity assessment) durchgeführt worden sein. Die Konformität muss durch eine Konformitätserklärung (declaration of conformity) des Herstellers und das Anbringen eines Konformitätskennzeichens (conformity mark) einschließlich eines Metrologiezeichens (metrology mark) an dem Messgerät erklärt sein.

Die Konformitätsbewertung nach den Europäischen Richtlinien 2014/32/EU für Messgeräte (measuring instruments - MID) und 2014/31/EU für nicht-selbsttätige Waagen (non-automatic weighing instruments - NAWID) ersetzt die frühere erstmalige Eichung oder Ersteichung. Die Konformitätsprüfung, das Ausstellen einer Prüfbescheinigung und das Anbringen des Konformitätskennzeichens/Metrologiezeichens erfolgt durch eine von dem Hersteller des Messgeräts auswählbare staatlich benannte Prüfstelle oder kurz eine benannte Stelle (notified body). Die Aufgaben der bisherigen Nacheichung von verwendeten Messgeräten verbleiben bei den Eichbehörden.

Bei modularen nicht-selbsttätigen Waagen (NSW) kann im Rahmen der Konformitätsprüfung ein Kompatibilitätsnachweis erforderlich sein. Dies ist beispielsweise dann der Fall, wenn die nicht-selbsttätige Waage, nicht als Komplettsystem ausgeliefert wird und rechtlich relevante Module, z. B. Wägezellen, unterschiedlicher Ausführung oder von unterschiedlichen Herstellern verwendet werden sollen. Ein Modul ist ein Teil der nicht-selbsttätigen Waage, der erforderlich ist, um das Wägeergebnis und alle anderen, mit ihm zusammenhängenden Hauptanzeigen zu erhalten, wie Auswertegerät, Lastträger, Wägezelle und Zusatzeinrichtung. Ein Modul kann getrennt geprüft werden und hat die ihm zugewiesene Teilfehlergrenze. Auch jedes Gerät, das an eine nicht-selbsttätige Waage über nicht rückwirkungsfreie Schnittstellen angeschlossen ist, wird als Modul angesehen. Die Verbindung muss in diesem Fall gesichert werden. Wenn keine Geräte angeschlossen sind, muss die nicht rückwirkungsfreie Schnittstelle selbst gesichert werden. Durch den Kompatibilitätsnachweis wird die eichtechnische Verträglichkeit bei Kombinationen von wägetechnischen Modulen dokumentiert. Der Kompatibilitätsnachweis ist also ein Dokument, in dem die angegeben sind, die zusammen die Konformität des gesamten Messgeräts mit den gesetzlich vorgegebenen wesentlichen Anforderungen und die Bedingungen seiner Kompatibilität mit anderen Baueinheiten, Schnittstellen und Teilgeräten festlegen.

Die Europäische Zusammenarbeit im gesetzlichen Messwesen (WELMEC) hat in dem Leitfaden WELMEC 2, Ausgabe 3, 2000, Nr. 11 ein Formular vorgeschlagen, dass es erlaubt, das vollständige Gerät zu charakterisieren und so den Beweis der Kompatibilität mit den messtechnischen Anforderungen zu erbringen. Berechnungstabellen für die Kompatibilität der Module sind auch als Excel-Datenblatt in elektronischer Form vorhanden.

Zum Beispiel:
https://www.mebw.de/?q=node/34, Waagen:
   - Kompatibilitätsnachweis für Module (Infoblatt)
   - Kompatibilitätsnachweis für Module (Berechnung in Excel)
   oder
https://certification.madebydelta.com/weighing/compatibilityof-modules/ (siehe Downloads)

Für jede Waagenkonfiguration muss ein Excel-Datenblatt ausgefüllt werden. Durch Wahl der entsprechenden Waagenausführung aus einem Pull-Down-Menü auf einer Eingabeseite wird automatisch eine passende Auswerteseite zugeordnet. Das enthaltene Excel-Programm berechnet aus den eingegebenen Daten der wägetechnischen Module automatisch, ob Kompatibilität besteht. Bei der Konformitätsprüfung muss das Excel-Datenblatt der benannten Stelle vorgelegt werden.

Aus der DE 10 2014 100754 A1 ist eine Waage, insbesondere eine eichpflichtige Ladenwaage bekannt, bei der Wägeergebnisse über eine verschlüsselte drahtlose Kommunikationsverbindung auf ein mobiles Anzeigegerät, beispielsweise ein Mobiltelefon, Smartphone oder Tablets übertragen wird. Der Aufbau der Kommunikationsverbindung kann sowohl von der Waage als auch von dem mobilen Anzeigegerät initiiert werden, auf dem anschließend eine eindeutige Kennung der Waage anzeigt wird. Danach prüft die Waage durch Zugriff auf einen Speicher oder eine Datenbank, ob das mobile Anzeigegerät einem für eine vorgegebenen Anforderungen genügende Anzeige der Wägeergebnisse zugelassenen Gerätemodell entspricht. Die Waage kann auch Anzeigeparameter des mobilen Anzeigegeräts, insbesondere Auflösung und Punktedichte, lesen und prüfen, ob auf dem mobilen Anzeigegerät eine den vorgegebenen Anforderungen genügende Anzeige der Wägeergebnisse möglich ist.

Aus der WO 02/12840 A2 ist eine Waage mit Wägezellen bekannt, die jeweils eine eindeutige Kennung enthalten. Die Waage akzeptiert Wägesignale nur von solchen Wägezellen, deren Kennungen in einem Speicher der Waage hinterlegt sind.

Der Erfindung liegt die Aufgabe zugrunde, den Nachweis der Kompatibilität von Modulen einer nicht-selbsttätigen Waage zu vereinfachen.

Gemäß der Erfindung wird die Aufgabe durch die in Anspruch 1 definierte modulare nicht-selbsttätige Waage und das in Anspruch 8 angegebene Verfahren gelöst.

Vorteilhafte Weiterbildungen der erfindungsgemäßen Waage bzw. des Verfahrens sind in den Unteransprüchen angegeben.

Gegenstand der Erfindung ist somit eine modulare nicht-selbsttätige Waage, die einer Konformitätsnachweispflicht nach EU-Richtlinie unterliegt, mit einem Auswertemodul, das eine rechtlich relevante Firmware enthält, wobei in der Firmware oder in einem mit dieser über eine gesicherte Verbindung kommunizierenden Netzwerkspeicher ein Berechnungsprogramm enthalten ist, das aus ihm zugeführten modulspezifischen rechtlich relevanten messtechnischen und technischen Daten automatisch die Kompatibilität der Module der Waage im Hinblick auf die nachzuweisende Konformität prüft und einen das Ergebnis der Prüfung mit den zugrunde liegenden rechtlich relevanten messtechnischen und technischen Daten beinhaltenden Kompatibilitätsnachweis zur Ausgabe bereitstellt, mit einem aktivierbaren Schreibschutz, der bei Aktivierung ein Überschreiben der dem Berechnungsprogramm zugeführten rechtlich relevanten messtechnischen und technischen Daten verhindert, und mit Versiegelungsmitteln zur Versiegelung des aktivierten Schreibschutzes oder der schreibgeschützten rechtlich relevanten messtechnischen und technischen Daten.

Gegenstand der Erfindung ist ferner ein Verfahren zum Erstellen eines Kompatibilitätsnachweises für eine modulare nicht-selbsttätige Waage, die einer Konformitätsnachweispflicht nach EU-Richtlinie unterliegt, wobei ein Berechnungsprogramm, das in einer rechtlich relevanten Firmware eines Auswertemoduls der Waage oder in einem mit der Firmware über eine gesicherte Verbindung kommunizierenden Netzwerkspeicher enthalten ist, aus ihm zugeführten modulspezifischen rechtlich relevanten messtechnischen und technischen Daten automatisch die Kompatibilität der Module der Waage im Hinblick auf die nachzuweisende Konformität prüft und einen das Ergebnis der Prüfung mit den zugrunde liegenden rechtlich relevanten messtechnischen und technischen Daten beinhaltenden Kompatibilitätsnachweis zur Ausgabe bereitstellt, und wobei mittels eines aktivierbaren Schreibschutzes ein Überschreiben der dem Berechnungsprogramm zugeführten rechtlich relevanten messtechnischen und technischen Daten verhindert wird und der aktivierte Schreibschutz oder die schreibgeschützten rechtlich relevanten messtechnischen und technischen Daten versiegelt werden.

Der Begriff Konformitätsnachweispflicht ist hier in einem weiten Sinn und beispielsweise synonym zu Eichpflicht zu verstehen, so dass entsprechend der rechtlich relevante (legally relevant) Teil gleichbedeutend mit einem eichpflichtigen oder eichrelevanten Teil des Auswertemoduls ist.

Das Berechnungsprogramm selbst, d h. die Rechenvorschrift, ist nicht Gegenstand der vorliegenden Anmeldung sondern wird von staatlich benannten Prüfstellen oder Eichbehörden vorgegeben, so wie das oben erwähnte Excel-Programm für nicht-selbsttätige Waagen.

Nach Eingabe der modulspezifischen messtechnischen und technischen Daten und erfolgreicher automatischen Prüfung der Module der Waage auf Kompatibilität können diese eichrelevanten Daten bis zur Konformitätsprüfung durch die benannte Stelle oder eine vergleichbare Stelle, z. B. Eichbehörde, durch den Schreibschutz gegen unerwünschtes Überschreiben geschützt werden. Bei dem Schreibschutz kann es sich z. B. um einen Hardware-Schalter (z. B. eine Steckbrücke (Jumper)) oder Software-Schalter handeln, der ggf. kodiert oder über ein Passwort o. dgl. geschützt ist.

Die automatisch ermittelte Kompatibilität und der aktivierte Schreibschutz können dem Vertreter der Prüfstelle, z. B. dem Eichbeamten, vor Ort durch eine entsprechende Anzeige, insbesondere eine rechtlich relevante (eichfähige) Hauptanzeige (primary indicator), die zur Anzeige des von der Waage gelieferten Messergebnisses dient, einfach, schnell und papierlos zur Verfügung gestellt werden.

Nachdem der Vertreter der Prüfstelle die Kompatibilitäts- oder Konformitätsprüfung abgeschlossen hat, kann er den aktivierten Schreibschutz mittels einer Versiegelung gegen Deaktivieren sichern. Dabei zeigt ihm ein geeignetes Symbol in der Hauptanzeige an, dass der Schreibschutz tatsächlich aktiviert ist. Die Versiegelung kann dadurch erfolgen, dass der oben erwähnte Hardware-Schalter mit einem Siegel überklebt wird oder dass der rechtlich relevante bzw. eichpflichtige Teil des Auswertemoduls mit den darin angeordneten Schreibschutzmitteln entsprechend mechanisch versiegelt wird. Die Versiegelung kann auch digital durch Verschlüsselung und Signierung der schreibgeschützten messtechnischen und technischen Daten in dem Berechnungsprogramm erfolgen.

Der Kompatibilitätsnachweis, also das Ergebnis der Kompatibilitätsprüfung mit den zugrunde liegenden rechtlich relevanten messtechnischen und technischen Daten kann jederzeit aus dem Auswertemodul ausgelesen und angezeigt oder ggf. ausgedruckt werden.

Da in der Regel zahlreiche für den Kompatibilitätsnachweis benötigte Daten bereits in Form von bekannten Konstanten in dem Auswertemodul vorliegen (z. B. Typenbezeichnung, Genauigkeit, Messbereich, Temperaturbereich, usw.), können sie automatisch von dem Berechnungsprogramm eingelesen werden. Dies gilt auch für die entsprechenden Daten anderer Module, soweit es sich um sogenannte intelligente oder digitale Module handelt. Ein Beispiel hierfür sind digitale Wägezellen. Zumindest eine Vielzahl technischer Daten bzw. modulspezifischer Konstanten muss daher nicht mehr in Datenblättern gesucht und manuell eingegeben werden. Im Vergleich zur bisherigen Praxis entfällt das Befüllen externer Listen oder Excel-Datenblätter komplett.

Im Weiteren wird die Erfindung anhand von Ausführungsbeispielen und unter Bezugnahme auf die Figuren der Zeichnung erläutert; im Einzelnen zeigen:
- Figur 1: ein erstes Ausführungsbeispiel der erfindungsgemäßen modularen Waage und
- Figur 2: ein zweites Ausführungsbeispiel der erfindungsgemäßen modularen Waage.

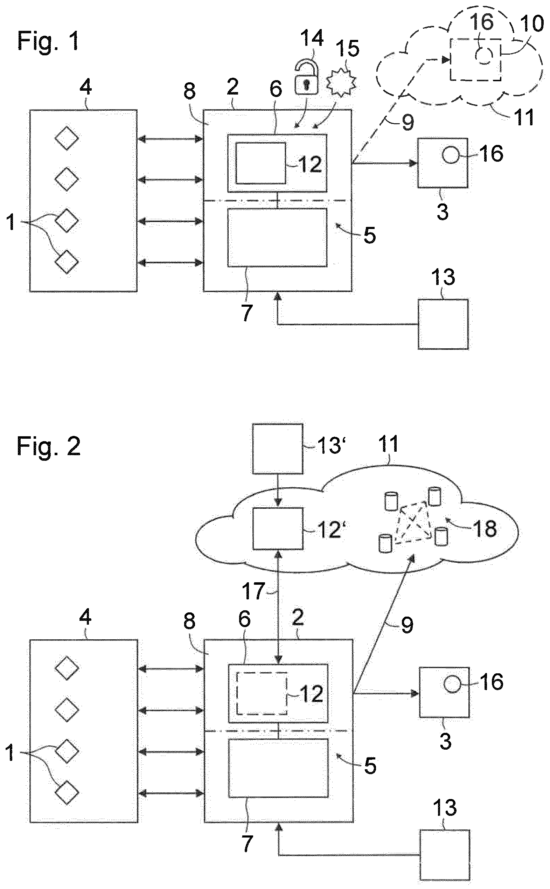

Figur 1 zeigt ein vereinfachtes schematisches Blockschaltbild einer modular aufgebauten Waage, deren Konformität mit gesetzlich vorgegebenen wesentlichen Anforderungen nachzuweisen ist. Die Waage weist eine Anordnung mit mehreren Sensoren 1, ein Auswertemodul 2 und eine Hauptanzeige 3 auf. Bei den Sensoren 1 handelt es sich hier um Wägezellen, die an einem Lastträger 4 für eine hier nicht gezeigte zu messende Last angebracht sind. Die Wägezellen 1, der Lastträger 4, das Auswertemodul 2 und die Hauptanzeige 3 stellen rechtlich relevante (eichpflichtige) Module der Waage dar. Bei den Wägezellen 1 kann es sich um digitale oder sogenannte intelligente Wägezellen handeln, welche die aufgenommenen Lastsignale vorverarbeiten und in digitale Messsignale umsetzen. Das Auswertemodul 2 enthält eine Firmware 5 bestehend aus einem rechtlich relevanten Teil 6 und einem rechtlich nicht-relevanten Teil 7. Die rechtlich relevante Firmware 6 kann in einem rechtlich relevanten Teil 8 des Auswertemodul 2 untergebracht sein. Das in der rechtlich relevanten Firmware 6 durch Auswertung der digitalen Messsignale erzeugte Messergebnis kann anstatt über die Hauptanzeige 3 des Auswertemoduls 2 über eine sichere Verbindung 9 an eine entfernte Stelle 10, beispielsweise in einer Cloud 11, zum Zweck der Dokumentation, Anzeige, Abrechnung o. dgl. ausgegeben werden.

In dem rechtlich relevanten Teil 6 der Firmware 5 ist ein Berechnungsprogramm 12 enthalten, das anhand von ihm zugeführten und anschließend in ihm gespeicherten rechtlich relevanten messtechnischen und technischen Daten der Waagenmodule 1, 2, 3, 4 automatisch die Kompatibilität dieser Module im Hinblick auf die nachzuweisende Konformität prüft und das Ergebnis der Prüfung zur Ausgabe an der Hauptausgabe 3 oder über die sichere Verbindung 9 an der entfernten Stelle 10 bereitstellt. Beispiele für die rechtlich relevanten messtechnischen und technischen Daten sind Typenbezeichnung, Genauigkeit, Messbereich und Temperaturbereich der betreffenden Module 1, 2, 3, 4. Soweit diese Daten in den Modulen 1, 2, 3, 4 abgespeichert sind, können sie automatisch gelesen und in das Berechnungsprogramm 12 übertragen werden. Letzteres gilt insbesondere für die Daten des Auswertemoduls 2. Im Falle der oben erwähnten digitalen oder intelligenten Wägezellen 1, können deren modulspezifische messtechnische und technische Daten ohne Weiteres in den Wägezellen 1 hinterlegt und aus diesen automatisch ausgelesen werden. Andere relevante Daten wie die des Lastträgers 4 können über geeignete Eingabemittel manuell (Tastatur) oder durch maschinelles Lesen eines Codes (Scanner) eingegeben werden.

Nachdem das Berechnungsprogramm 12 anhand der ihm zugeführten rechtlich relevanten messtechnischen und technischen Daten der Module 1, 2, 3, 4 die Kompatibilität dieser Module geprüft und verifiziert hat, kann der Hersteller der Waage einen hier durch ein Sperrschloss symbolisierten Schreibschutz 14 aktivieren, um ein Überschreiben der rechtlich relevanten Daten in dem Berechnungsprogramm 12 zu verhindern. Bei dem Schreibschutz 12 kann es sich um einen mechanischen Hardware-Schalter, z. B. eine Steckbrücke (Jumper), oder einen Software-Schalter handeln, der ggf. kodiert oder über ein Passwort geschützt ist.

Die automatisch ermittelte Kompatibilität kann dem Vertreter der Prüfstelle vor Ort bei der Durchführung der Konformitätsprüfung der Waage beispielsweise über die Hauptanzeige 13 einfach, schnell und papierlos zur Verfügung gestellt werden. Nach Abschluss der Kompatibilitäts- oder Konformitätsprüfung durch den Vertreter der Prüfstelle kann er den aktivierten Schreibschutz 14 mittels einer hier durch ein Siegel symbolisierten Versiegelung 15 gegen Deaktivieren sichern. Dabei zeigt ihm ein geeignetes Symbol 16 in der Hauptanzeige 3 an, dass der zu versiegelnde Schreibschutz 14 tatsächlich aktiviert ist. Es besteht auch die Möglichkeit, dass das Auswertegerät 2 selbst gar keine Anzeige hat und der Vertreter der Prüfstelle vor Ort beispielsweise auf einem Smartphone über die gesicherte Verbindung 9 die eichfähige Anzeige online per Webbrowser abruft. Die Versiegelung 15 kann mechanisch mittels eines Siegels erfolgen, mit dem der Schreibschutz 14, z. B. der oben erwähnte Hardware-Schalter, überklebt wird. Dies gilt insbesondere für den Fall, dass das Auswertmodul 2 bzw. sein eichpflichtiger Teil 8 in einem verschlossenen Gehäuse untergebracht und der Hardware-Schalter von außen zugänglich an dem Gehäuse angeordnet ist. Befindet sich der Schreibschutz 14 innerhalb des Gehäuses, so kann dieses nach erfolgreichem Abschluss der Konformitätsprüfung verschlossen und durch Anbringen eines Konformitätskennzeichens/Metrologiezeichens mechanisch versiegelt werden, so dass der aktivierte Schreibschutz 14 ohne unzulässigen Eingriff nicht mehr zugänglich und deaktivierbar ist.

Die Versiegelung 15 kann auch digital, z. B. durch Verschlüsselung und Signierung der schreibgeschützten Daten in dem Berechnungsprogramm 12, erfolgen.

Der Datensatz bestehend aus den dem Berechnungsprogramm 12 zugeführten rechtlich relevanten messtechnischen und technischen Daten und das Ergebnis der automatischen und von dem Vertreter der Prüfstelle vor Ort bestätigten Kompatibilitätsprüfung bilden einen Kompatibilitätsnachweis, dessen Integrität alternativ zur Versiegelung 15 in der Auswerteeinrichtung 2 von dem Vertreter der Prüfstelle in eine zugriffsbeschränkte Blockchain überführt und so gesichert werden kann. Unter der zugriffsbeschränkten Blockchain ist hier eine solche zu verstehen, auf die nur staatlich benannte Prüfstellen schreibend zugreifen und Transaktionen validieren können (consortial / private blockchain).

Figur 2 zeigt ein weiteres Ausführungsbeispiel der erfindungsgemäßen modularen Waage, wobei gleiche Bezugszeichen gleiche oder entsprechende Elemente wie in Figur 1 bezeichnen und nachfolgend auf eine wiederholte Beschreibung verzichtet wird. Das Berechnungsprogramm 12' befindet sich außerhalb des Auswertemoduls 2 in einem "Remote Dienst", beispielsweise einem Server oder einem Cloud-Dienst. Das Berechnungsprogramm 12' kann über eine sichere Verbindung 17 in das Auswertemodul 2 geladen und dort, wie im Zusammenhang mit Figur 1 beschrieben, ausgeführt werden. Alternativ können die in dem Auswertemodul 2 enthaltenen bzw. von diesem von anderen Modulen, z. B. den Wägezellen 1, beschafften rechtlich relevanten messtechnischen und technischen Daten an das entfernte Berechnungsprogramm 12' übertragen werden, das anhand dieser Daten die automatische Kompatibilitätsprüfung durchführt und das Ergebnis der Prüfung in den rechtlich relevanten Teil 8 der Waage überträgt. Schreibschutz 14 und Versiegelung 15 können dann wie im Falle des Beispiels nach Figur 1 erfolgen.

Bei einer digitalen Versiegelung 15 unter Verwendung des Blockchain-Prinzips kann mit dem Datensatz aus den rechtlich relevanten messtechnischen und technischen Daten und dem Ergebnis der automatischen und von dem Vertreter der Prüfstelle vor Ort bestätigten Kompatibilitätsprüfung ein Blockchain-Eintrag bei dem "Remote Dienst" angefordert werden. Dies kann nur durch den Vertreter der Prüfungsstelle erfolgen. Der Datensatz wird z. B. über die Verbindung 9 in eine gemäß dem Blockchain-Prinzip ausgeführte verteilte Datenbank 18 in, z. B., der Cloud 11 übertragen und dort in einer Transaktion abgespeichert. Durch ein Blockchain-Protokoll wird somit der Eintrag an alle Knoten (Teilnehmer) der verteilten Datenbank 18 verteilt und dort validiert, wobei nur ausgewählte Teilnehmer, hier staatlich benannte Prüfstellen, die Validierung vornehmen können. Von dort erhält man als Nachweis für den erfolgreichen Eintrag ein digitales Zertifikat mit allen relevanten Transaktionsinformationen. Dieses digitale unveränderliche Zertifikat kann als Kompatibilitätsnachweis dann in dem eichpflichtigen Teil 8 des Auswertemoduls 2 hinterlegt werden.

## Patentansprüche

1. Modulare nicht-selbsttätige Waage, die einer Konformitätsnachweispflicht unterliegt, mit einem Auswertemodul (2), das eine rechtlich relevante Firmware (6) enthält, wobei in der Firmware (6) oder in einem mit dieser über eine gesicherte Verbindung (17) kommunizierenden Netzwerkspeicher (11) ein Berechnungsprogramm (12, 12') enthalten ist, das aus ihm zugeführten modulspezifischen rechtlich relevanten messtechnischen und technischen Daten automatisch die Kompatibilität der Module (1, 2, 3, 4) der Waage im Hinblick auf die nachzuweisende Konformität prüft und einen das Ergebnis der Prüfung mit den zugrunde liegenden rechtlich relevanten messtechnischen und technischen Daten beinhaltenden Kompatibilitätsnachweis zur Ausgabe bereitstellt, mit einem aktivierbaren Schreibschutz (14), der bei Aktivierung ein Überschreiben der dem Berechnungsprogramm (12, 12') zugeführten rechtlich relevanten messtechnischen und technischen Daten verhindert, und mit Versiegelungsmitteln (15) zur Versiegelung des aktivierten Schreibschutzes (14) oder der schreibgeschützten rechtlich relevanten messtechnischen und technischen Daten.

2. Modulare nicht-selbsttätige Waage nach Anspruch 1, **dadurch gekennzeichnet, dass** im Falle des in der rechtlich relevanten Firmware (6) des Auswertemoduls (2) enthaltenen Berechnungsprogramms (12) der Schreibschutz (14) als Hardware-Schalter und die Versiegelungsmittel (15) als auf den Hardware-Schalter oder auf ein den Hardware-Schalter beinhaltendes Gehäuse aufbringbares Siegel ausgebildet sind.

3. Modulare nicht-selbsttätige Waage nach Anspruch 1, **dadurch gekennzeichnet, dass** der Schreibschutz (14) und die Versiegelungsmittel (15) dazu ausgebildet sind, die messtechnischen und technischen Daten digital vor Überschreiben zu schützen und die schreibgeschützten Daten zu versiegeln.

4. Modulare nicht-selbsttätige Waage nach Anspruch 3, **dadurch gekennzeichnet, dass** die Versiegelungsmitteln (15) dazu ausgebildet sind, einen Datensatz bestehend aus den dem Berechnungsprogramm (12) zugeführten rechtlich relevanten messtechnischen und technischen Daten und dem Ergebnis der automatischen Kompatibilitätsprüfung durch Überführung in eine Blockchain zu sichern.

5. Modulare nicht-selbsttätige Waage nach einem der vorangehenden Ansprüche, **gekennzeichnet durch** eine Hauptanzeige (3), die dazu ausgebildet ist, das Ergebnis der automatischen Kompatibilitätsprüfung und den Aktivierungszustand (16) des Schreibschutzes (14) anzuzeigen.

6. Modulare nicht-selbsttätige Waage nach einem der vorangehenden Ansprüche, **dadurch gekennzeichnet, dass** das Auswertemodul (2) dazu ausgebildet ist, in ihm abgespeicherte modulspezifische messtechnische und technische Daten automatisch dem Berechnungsprogramm (12, 12') zuzuführen.

7. Modulare nicht-selbsttätige Waage nach einem der vorangehenden Ansprüche, **dadurch gekennzeichnet, dass** das Auswertemodul (2) dazu ausgebildet ist, in Modulen (1, 3, 4) der Waage abgespeicherte modulspezifische messtechnische und technische Daten aus den Modulen (1, 3, 4) auszulesen und dem Berechnungsprogramm (12, 12') zuzuführen.

8. Verfahren zum Erstellen eines Kompatibilitätsnachweises für eine modulare nicht-selbsttätige Waage, die einer Konformitätsnachweispflicht unterliegt, wobei ein Berechnungsprogramm (12, 12'), das in einer rechtlich relevanten Firmware (6) eines Auswertemoduls (2) der Waage oder in einem mit der Firmware (6) über eine gesicherte Verbindung (17) kommunizierenden Netzwerkspeicher (11) enthalten ist, aus ihm zugeführten modulspezifischen rechtlich relevanten messtechnischen und technischen Daten automatisch die Kompatibilität der Module (1, 2, 3, 4) der Waage im Hinblick auf die nachzuweisende Konformität prüft und einen das Ergebnis der Prüfung mit den zugrunde liegenden rechtlich relevanten messtechnischen und technischen Daten beinhaltenden Kompatibilitätsnachweis zur Ausgabe bereitstellt, und wobei mittels eines aktivierbaren Schreibschutzes (14) ein Überschreiben der dem Berechnungsprogramm (12, 12') zugeführten rechtlich relevanten messtechnischen und technischen Daten verhindert wird und der aktivierte Schreibschutz (14) oder die schreibgeschützten rechtlich relevanten messtechnischen und technischen Daten versiegelt werden.

9. Verfahren nach Anspruch 8, **dadurch gekennzeichnet, dass** der Schreibschutz (14) mechanisch aktiviert und versiegelt wird.

10. Verfahren nach Anspruch 8, **dadurch gekennzeichnet, dass** die messtechnischen und technischen Daten digital schreibgeschützt und versiegelt werden.

11. Verfahren nach Anspruch 10, **dadurch gekennzeichnet, dass** zur Versiegelung ein Datensatz bestehend aus den dem Berechnungsprogramm (12, 12') zugeführten rechtlich relevanten messtechnischen und technischen Daten und dem Ergebnis der automatischen Kompatibilitätsprüfung in eine Blockchain überführt wird.

## Claims

1. Modular non-automatic scales, which are subject to an obligation to prove conformity, having an evaluation module (2), which contains legally relevant firmware (6), wherein a calculation program (12, 12') is contained in the firmware (6) or in a network storage device (11) which communicates herewith by way of a secure connection (17), said calculation program automatically checking the compatibility of the modules (1, 2, 3, 4) of the scales in respect of the conformity to be proven from module-specific legally relevant measuring-technology and technical data supplied thereto and a proof of compatibility containing the result of the check with the underlying legally relevant measuring-technology and technical data for output purposes, having an activatable write protection (14) which, on activation, prevents an overwriting of legally relevant measuring-technology and technical data supplied to the calculation program (12, 12'), and having sealing means (15) for sealing the activated write protection (14) or the write-protected legally relevant measuring-technology and technical data.

2. Modular non-automatic scales according to claim 1, **characterised in that** in the case of the calculation program (12) contained in the legally relevant firmware (6) of the evaluation module (2), the write protection (14) is embodied as a hardware switch and the sealing means (15) is embodied as a seal which can be attached to the hardware switch or to a housing containing the hardware switch.

3. Modular non-automatic scales according to claim 1, **characterised in that** the write protection (14) and the sealing means (15) are embodied to protect the measuring-technology and technical data digitally against overwriting and to seal the write-protected data.

4. Modular non-automatic scales according to claim 3, **characterised in that** the sealing means (15) are embodied to secure a data record consisting of the legally relevant measuring-technology and technical data supplied to the calculation program (12) and the result of the automatic compatibility check by transfer into a block chain.

5. Modular non-automatic scales according to one of the preceding claims, **characterised by** a main display (3), which is embodied to display the result of the automatic compatibility check and the activation state (16) of the write protection (14).

6. Modular non-automatic scales according to one of the preceding claims, **characterised in that** the evaluation module (2) is embodied to automatically supply module-specific measuring-technology and technical data stored therein to the calculation program (12, 12').

7. Modular non-automatic scales according to one of the preceding claims, **characterised in that** the evaluation module (2) is embodied to read module-specific measuring-technology and technical data stored in modules (1, 3, 4) of the scales out from the modules (1, 3, 4) and to supply the same to the calculation program (12, 12').

8. Method for creating a proof of compatibility for modular non-automatic scales, which are subject to an obligation to prove conformity, wherein
a calculation program (12, 12'), which is contained in legally relevant firmware (6) of an evaluation module (2) of the scales or in a network storage device (11) which communicates with the firmware (6) by way of a secure connection (17), automatically checks the compatibility of the modules (1, 2, 3, 4) of the scales in respect of the conformity to be checked from module-specific legally relevant measuring-technology and technical data supplied therefrom and provides a compatibility certificate containing the result of the check with the underlying legally relevant measuring-technology and technical data for output purposes, and wherein by means of an activatable write protection (14) an overwriting of the legally relevant measuring-technology and technical data supplied to the calculation program (12, 12') is prevented and the activated write protection (14) or the write-protected legally relevant measuring-technology and technical data are sealed.

9. Method according to claim 8, **characterised in that** the write protection (14) is activated and sealed mechanically.

10. Method according to claim 8, **characterised in that** the measuring-technology and technical data are write-protected and sealed digitally.

11. Method according to claim 10, **characterised in that** for sealing purposes a data record comprising the legally relevant measuring-technology and technical data supplied to the calculation program (12, 12') and the result of the automatic proof of compatibility is transferred into a block chain.

## Revendications

1. Bascule modulaire non automatique, qui est soumise à un devoir de preuve de conformité, comprenant un module (2) d'analyse, qui contient microprogramme (6) pertinent légalement, dans lequel, dans le microprogramme (6) ou dans une mémoire (11) de réseau, communiquant avec celui-ci par une liaison (17) sécurisée, est contenu un programme (12, 12') de calcul qui, à partir de données de technique de mesure et techniques pertinentes légalement et spécifiques à un module, qui lui sont envoyées, contrôle automatiquement la conformité à prouver de la compatibilité des modules (1, 2, 3, 4) de la balance et met à disposition pour l'édition une preuve de compatibilité contenant le résultat du contrôle avec les données de technique de mesure et techniques pertinentes légalement, qui le fondent, comprenant une protection (14) d'écriture activable, qui à l'activation empêche une surimpression des données de technique de mesure et techniques pertinentes légalement envoyées au programme (12, 12') de calcul et comprenant des moyens (15) à sceau pour apposer le sceau sur la protection (14) d'écriture activée ou sur les données de technique de mesure et techniques pertinentes légalement protégées d'écriture.

2. Balance modulaire non automatique suivant la revendication 1, **caractérisée en ce que**, dans le cas du programme (12) de calcul contenu dans le microprogramme (6) pertinent légalement du module (2) d'analyse, la protection (14) d'écriture est constituée sous la forme d'un interrupteur matériel et les moyens (15) à sceau sous la forme d'un sceau pouvant être mis sur l'interrupteur matériel ou sur un boîtier contenant l'interrupteur matériel.

3. Balance modulaire non automatique suivant la revendication 1, **caractérisée en ce que** la protection (14) d'écriture et les moyens (15) à sceau sont constitués de manière à protéger numériquement de surimpression les données de technique de mesure et techniques et à mettre sous sceau les données protégées d'écriture.

4. Balance modulaire non automatique suivant la revendication 3, **caractérisée en ce que** les moyens (15) à sceau sont constitués pour sécuriser, par transfert dans un bloc chaîne, un ensemble de données constitué des données de technique de mesure et techniques pertinentes légalement envoyées au programme (12) de calcul, et du résultat du contrôle automatique de compatibilité.

5. Balance modulaire non automatique suivant l'une des revendications précédentes, **caractérisée par** une indication (3) principale, qui est constituée pour indiquer le résultat du contrôle automatique de compatibilité et l'état (16) d'activation de la protection (14) d'écriture.

6. Balance modulaire non automatique suivant l'une des revendications précédentes, **caractérisée** en ce le module (2) d'analyse est constitué pour envoyer automatiquement au programme (12, 12') de calcul des données de technique de mesure et techniques spécifiques à un module, qui y sont en mémoire.

7. Balance modulaire non automatique suivant l'une des revendications précédentes, **caractérisée en ce que** le module (2) d'analyse est constitué pour lire dans des modules (1, 3, 4) des données de technique de mesure et techniques spécifiques à un module, mises en mémoire dans des modules (1, 3, 4) de la balance, et les envoyer au programme (12, 12') de calcul.

8. Procédé d'établissement d'une preuve de compatibilité pour une balance modulaire non automatique, qui est soumise à un devoir de preuve de conformité, dans lequel un programme (12, 12') de calcul, qui est contenu dans un microprogramme (6) pertinent légalement d'un module (2) d'analyse de la balance ou dans une mémoire (11) de réseau communiquant avec le microprogramme (6) par une liaison (17) sécurisée, contrôle, à partir des données de technique de mesure et techniques pertinentes légalement et spécifiques à un module qui lui sont envoyées automatiquement, la compatibilité des modules (1, 2, 3, 4) de la balance en ce qui concerne la conformité à prouver, et met à disposition, pour l'édition, une preuve de compatibilité contenant le résultat du contrôle avec les données de technique et techniques pertinentes légalement, qui le fonde et, dans lequel, au moyen d'une protection (14) d'écriture pouvant être activée, on empêche une sur-inscription des données de technique de mesure et techniques pertinentes légalement, envoyées au programme (12, 12') de calcul, et on met sous sceau la protection (14) d'écriture activée ou les données de technique de mesure et techniques pertinentes légalement protégées d'écriture.

9. Procédé suivant la revendication 8, **caractérisé en ce que** l'on active et met sous sceau mécaniquement la protection (14) d'écriture.

10. Procédé suivant la revendication 8, **caractérisé en ce que** l'on protège d'écriture et on met numériquement sous sceau les données de technique de mesure et techniques.

11. Procédé suivant la revendication 10, **caractérisé en ce que**, pour la mise sous sceau, on transmet à un bloc chaîne un ensemble de données, constitué des données de technique de mesure et techniques pertinentes légalement, envoyées au programme (12, 12') de calcul, et le résultat du contrôle automatique de compatibilité.
